# FASCICULE DE BREVET EUROPEEN

(11) **EP 0 519 796 B1**
(45) Date de publication et mention de la délivrance du brevet: **18.12.1996**
(21) Numéro de dépôt: 92401652.0
(22) Date de dépôt: 15.06.1992
(51) Int. Cl.: H04J 3/16

(54) **Dispositif multiplexage à insertion de paquets numériques et avec différents niveaux de priorité dans un canal de transmission**
Multiplexer mit Einfügung von digitalen Paketen mit verschiedenen Prioritäten in einem Übertragungskanal
Multiplexer for inserting digital packets with different priority levels in a transmission channel

(30) Priorité: 18.06.1991 FR 9107443
(43) Date de publication de la demande: 23.12.1992
(73) Titulaire: MATRA COMMUNICATION, 29101 Quimper (FR)
(72) Inventeur: Mary, Jean, F-91400 Orsay (FR)
(74) Mandataire: Fort, Jacques

(56) Documents cités:
- EP-A- 0 171 596
- DE-A- 2 625 528
- FR-A- 2 629 972
- GB-A- 2 155 729
- PATENT ABSTRACTS OF JAPAN vol. 015, no. 165 (E-1061)25 Avril 1991 & JP-A-30 35 635
- IEEE PROCEEDINGS INTERNATIONAL CONFERENCE ON CONSUMER ELECTRONICS 6 Juin 1989, ROSEMONT (US) pages 280 - 281 F. COUTROT ET AL. 'A single conditional access system for satellite-cable and terrestrial tv.'
- RUNDFUNKTECHNISCHE MITTEILUNGEN. vol. 29, no. 1, 1 Janvier 1985, NORDERSTEDT DE, pages 23-35; CHRISTOPH DOSCH 'C-MAC/PACKET Normvorschlag der Europäischen Rundfunkunion für den Satellitenrundfunk.'
- FUNKSCHAU. vol. 61, no. 24, 1 Février 1989, MUNCHEN DE, pages 59-62; CHARLES SCHEPERS 'Der Schlüssel zum Scrambling-Problem?'

## Description

La présente invention a pour objet un dispositif d'insertion de paquets numériques fournis par différentes sources dans un canal de transmission ayant un débit moyen au moins égal à la somme des débits moyens fournis par les sources. Elle trouve une application particulièrement importante dans l'insertion de paquets pour constituer le multiplex numérique d'un signal de télévision appartenant à la famille X-MAC/PAQUET.

Dans un signal X-MAC/PAQUET, le flot de bits destiné à la transmission et à la diffusion du son et des données est réparti en paquets de longueur fixe, ayant chacun une adresse de 23 bits, permettant d'identifier l'origine du paquet, et une partie utile de 728 bits. Le canal a un débit de valeur moyenne constante (pouvant, suivant le cas, aller de 2050 à 24.600 paquets par seconde) mais de valeur instantanée variable. L'organe d'entrée du canal de sortie, constitué par exemple par le multiplexeur temporel de formation du multiplex destiné à être adressé au modulateur effectue des demandes de paquets au fur et à mesure de ses disponibilités.

Chaque source présente des caractéristiques de débit et des règles d'insertion dans le canal de sortie qui lui sont propres. L'ordre d'insertion des paquets dans le canal de sortie doit tenir compte de ces éléments.

Dans le cas par exemple d'un système D2-MAC/PAQUET à accès conditionnel suivant la norme "EUROCRYPT", le canal numérique peut avoir à transmettre une ou plusieurs voies son exigeant chacune une capacité de 250 à 1778 paquets par seconde et dont le décalage par rapport à l'image doit rester faible (son original et doublage par exemple), une ou plusieurs voies son haute-fidélité exigeant un débit supérieur au précédent, une voie d'identification des services constituée de paquets ayant l'adresse zéro, et des paquets représentant les messages de contrôle des titres d'accès ou ECM (Entitlement Checking Messages) et les messages de gestion des titres d'accès ou EMM (Entitlement Management Messages). De plus le canal numérique doit transmettre des signaux éventuels de télétexte en paquets.

On voit que les sources ont des débits qui varient de source en source et des règles d'insertion qui peuvent également varier.

Il existe déjà plusieurs techniques d'insertion.

Celle qui est décrite dans le document "The EBUC-MAC/PAQUET system for direct broadcasting by satellite", par Mertens et al, IEEE International Conference on Communications, ICC 84, vol. 1, p. 1-9 North-Holland, New-York, consiste à présenter des données en provenance de diverses sources à un multiplexeur comportant des mémoires tampon d'entrée en nombre égal à celui des sources. Chaque fois que le multiplexeur est prêt à constituer un paquet, il examine les mémoires tampon dans un ordre de priorité qui dépend des besoins de continuité des services et il choisit les données dans une mémoire qui contient suffisamment d'informations pour constituer un paquet tout entier.

Le document FR-A-2 629 972 décrit un dispositif de gestion de priorité ayant deux files d'attente en cascade ; la sortie de la seconde est reliée à une entrée d'un multiplexeur ; l'entrée de la première est reliée à un comparateur et à l'autre entrée du multiplexeur.

L'invention vise à fournir un dispositif d'insertion répondant mieux que ceux antérieurement connus aux exigences de la pratique, notamment en ce qu'il permet d'ajouter des sources supplémentaires sans surcroît de travail appréciable pour le multiplexeur de paquets, donc sans nécessité de modification de ce dernier, toutes les sources ayant la même constitution générale et étant réalisables sous forme de circuit intégré.

Dans ce but, l'invention propose notamment un dispositif d'insertion de paquets numériques dans un canal de transmission suivant la revendication 1.

Dans un tel dispositif, la fonction de stockage des paquets est reportée dans les sources.

Lorsque le débit moyen du canal est nettement supérieur au débit total moyen des sources et que les variations de débit instantané disponible ne représentent qu'une fraction faible du débit moyen, chaque source peut être prévue pour fixer l'ordre de priorité du paquet à émettre une fois pour toutes. Lorsqu'au contraire le débit moyen du canal est peu supérieur à la somme des débits moyens, il peut être préférable de prévoir les sources de façon à ce qu'elles donnent aux paquets une priorité croissante en fonction du temps d'attente.

Dans le cas particulier, mentionné plus haut, d'un dispositif d'insertion pour modulateur D2-MAC/PAQUET à accès conditionnel, il est possible de retarder notablement les messages de contrôle d'accès, qui ne sont répétés qu'à intervalles de l'ordre de 500 ms, avec modification des mots de contrôle toutes les 10 secondes, avec une avance sur l'instant de modification du mot de contrôle, et encore davantage les messages de gestion des titres et droits d'accès qu'il suffit de transmettre à intervalles suffisamment faibles pour que les abonnés ne subissent pas un retard excessif.

Les sources montées en cascade peuvent attaquer l'organe d'entrée par l'intermédiaire d'une interface de sélection entre plusieurs voies d'entrée en parallèle.

L'invention sera mieux comprise à la lecture de la description qui suit d'un mode particulier de réalisation donné à titre d'exemple non limitatif. La description se réfère aux dessins qui l'accompagnent, dans lesquels :
- la figure 1 est un schéma synoptique de principe montrant un dispositif d'insertion selon un mode particulier de réalisation ;
- la figure 2 montre une variante de réalisation ;
- la figure 3 montre une organisation possible des priorités, dans le cas d'un multiplex D2.

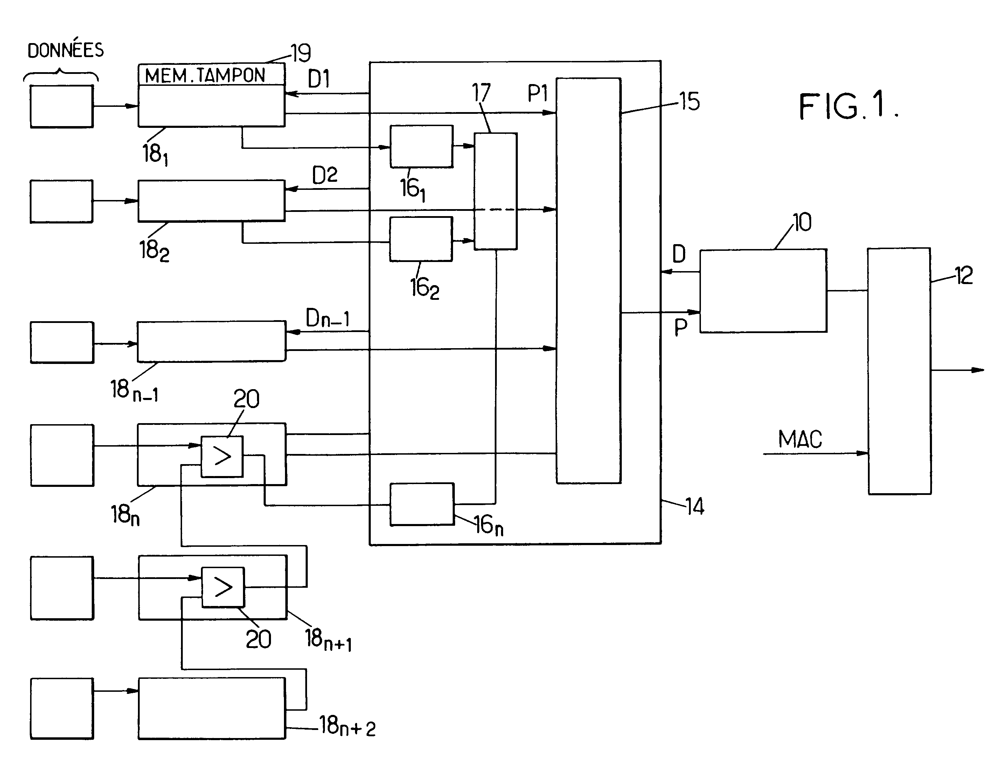

Le dispositif d'insertion montré en figure 1 est destiné à fournir à l'organe d'entrée 10 d'un canal de sortie, les paquets destinés à constituer la partie numérique, codée en duo-binaire, d'un multiplex temporel en bande de base formé par un multiplexeur 12. Pour cela, l'organe d'entrée 10 est prévu, de façon classique, pour envoyer des demandes D de paquets, en fonction des disponibilités, et répartir les paquets P qu'il reçoit en salves.

Le mode de réalisation montré en figure 1 comporte plusieurs voies d'entrée en parallèle et un sélecteur de multiplexage de paquets 14 permettant d'orienter, vers l'organe 10, le paquet ayant la plus forte priorité. Pour cela il comporte un sélecteur proprement dit 15, des mémoires 16₁, 16₂,..., 16ₙ destinées chacune à stocker un ordre de priorité correspondant à un paquet disponible à partir d'un canal respectif 1, 2,... n et un circuit 17 de comptabilité des paquets en réserve dans les mémoires et de mémorisation de leur type.

Le sélecteur de multiplexage est prévu pour sélectionner la source qui correspond à l'ordre de priorité le plus élevé et transférer un paquet (ou plusieurs paquets en nombre déterminé) du canal d'entrée sélectionné vers le canal de sortie.

Les canaux 1 à n-1 représentés ont une seule source. La source 18₁ par exemple est prévue pour regrouper les données qu'elle reçoit, en paquets ayant tous la même adresse et définir une priorité. La source peut en particulier comporter une mémoire tampon 19 d'accumulation des données entrantes et des moyens de formatage de ces données en paquets ayant un en-tête et d'affectation d'une priorité aux paquets. Cette affectation peut se faire :
- en fonction du type de paquets, suivant un critère fixe pour la source,
- du nombre de paquets en attente, l'ordre de priorité s'accroissant au fur et à mesure du remplissage de la mémoire de la source,
- de règles d'insertion prédéterminées, éventuellement en tenant compte d'un signal d'acquittement provenant du multiplexeur 12 formant le multiplex en bande de base.

Toutes les sources peuvent avoir la même constitution, du genre décrit ci-dessus.

Mais certaines sources peuvent avoir une fonction particulière.

Par exemple, dans le cas illustré, la source 18ₙ₋₁ est constituée par une source de paquets de bourrage, ayant la priorité la plus basse, à laquelle est affectée l'adresse 1023.

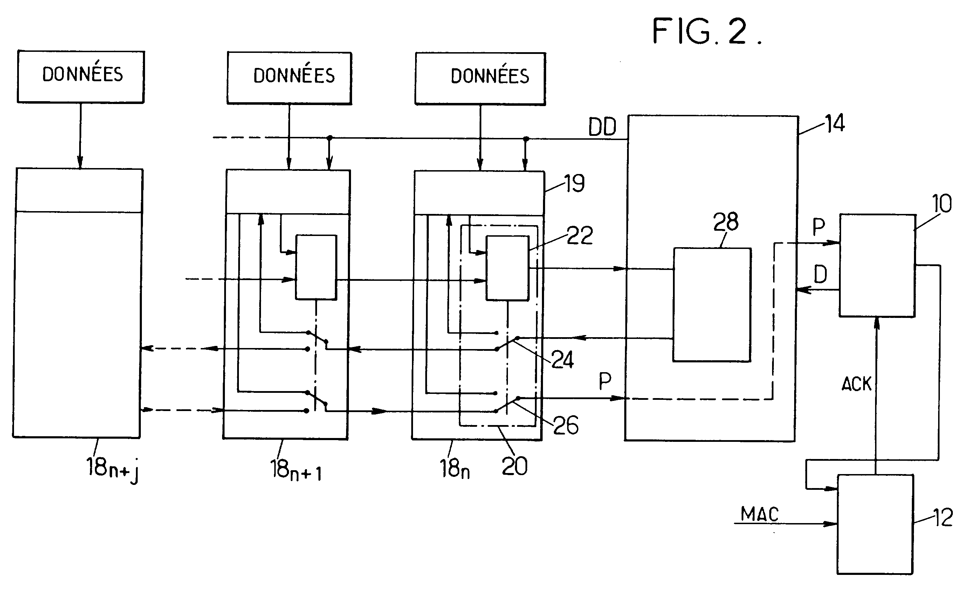

Le canal n présente une constitution particulière, conforme à l'invention. La source aval 18ₙ de ce canal constitue une interface de multiplexage, permettant au sélecteur de multiplexage de paquets 14 de traiter, sans complication matérielle ou logicielle, plusieurs sources. Pour cela la source 18ₙ comporte un circuit d'aiguillage 20 fournissant sur sa sortie la priorité la plus élevée parmi les deux priorités appliquées sur son entrée et chacune des sources supplémentaires 18ₙ₊₁, 18ₙ₊₂,..., jusqu'à l'avant-dernière incluse, a la même constitution. Ainsi la seule priorité qui est présentée au sélecteur de multiplexage de paquets 14 est la plus élevée parmi celles de toutes les sources supplémentaires. Une constitution possible des sources sera décrite plus loin en faisant référence à la figure 2.

Le fonctionnement du dispositif découle immédiatement de la description qui précède : lors de l'envoi d'une demande de paquets D au sélecteur de multiplexage de paquets 14, celui détermine la source qui a la priorité la plus élevée et émet vers elle une demande, D1 par exemple. En réponse, la source interrogée émet un paquet, P1 par exemple, vers la sortie.

Le dispositif de multiplexage montré en figure 2 (où les éléments correspondant à ceux de la figure 1 portent le même numéro de référence) se différencie du précédent en ce qu'il comprend un seul canal d'entrée. En conséquence, le sélecteur de multiplexage 14 est très simplifié.

Toutes les sources peuvent avoir la même constitution.

Chacune d'elles, exception faite de la source 18ₙ₊ⱼ la plus en amont, a la même fonction. La source 18ₙ par exemple comporte un circuit 19 de mise en paquets et un circuit d'aiguillage 20. Chaque circuit d'aiguillage peut être regardé comme ayant un comparateur de priorités 22 et deux commutateurs 24 et 26 commandés par le comparateur 22. Ce dernier reçoit une indication d'ordre de priorité locale élaborée par le circuit 19 et une indication d'ordre de priorité amont provenant de la source amont. Il émet vers l'aval la priorité la plus élevée et oriente le commutateur 24, vers le haut (dans le cas de la figure 2) si la priorité locale est égale ou supérieure à la priorité en amont, vers le bas dans le cas contraire. La priorité retenue en aval est communiquée à un générateur d'autorisation d'émission 28 appartenant au sélecteur 14. Ce dernier envoie, en réponse à une demande de paquets, une autorisation qui est orientée vers le circuit 19 approprié par le premier commutateur 24 orienté vers le haut qui est rencontré. Ce commutateur provoque l'émission, par le circuit 19, d'un paquet qui arrive au sélecteur 14 par les commutateurs 20 de la source qui émet et de celles placées en aval. Le multiplexeur 12 peut être prévu pour retourner un signal d'acquittement ACK une fois une salve insérée.

Dans le cas déjà envisagé d'un dispositif d'insertion pour un modulateur D2-MAC, l'ordre de priorité croissante peut être le suivant :
- paquets de bourrage,
- messages de gestion des titres d'accès,
- messages de contrôle des titres d'accès,
- voie zéro (dont l'ordre de priorité peut être modulé en fonction du nombre de paquets à émettre sur cette voie),
- voie de données,
- voie son à débit élevé, lorsque la source n'a pas commencé à émettre un groupe constitué d'un nombre déterminé de paquets en cours,
- voie son à débit élevé, lorsqu'une émission est en cours,
- voie son à faible débit.

Les deux dernières priorités peuvent être accrues ou diminuées suivant le nombre de paquets à émettre.

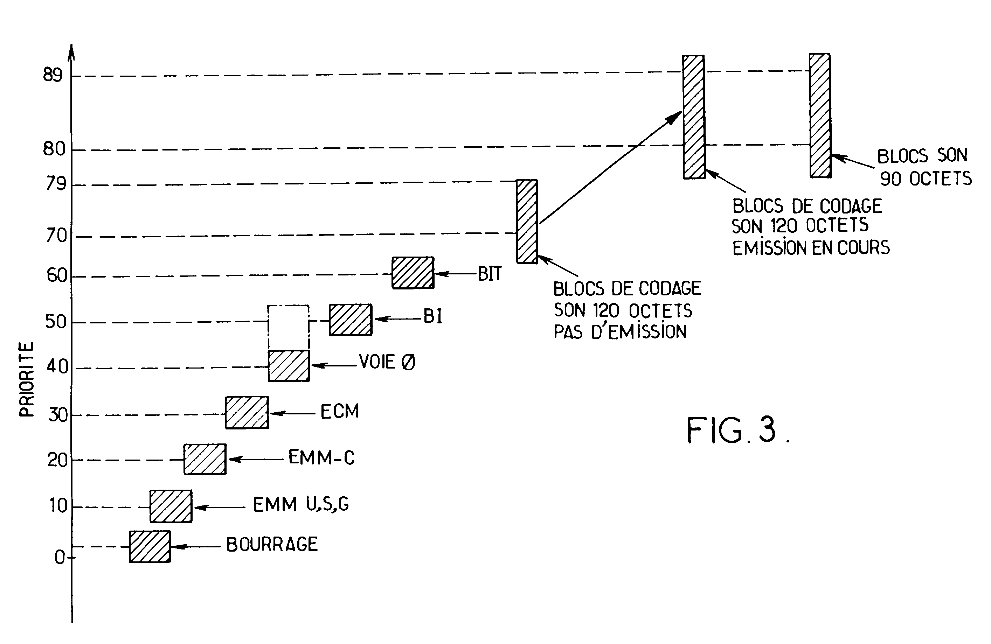

La figure 3 montre, à titre d'exemple, les niveaux de priorité qui peuvent être affectés aux différents paquets, lors de l'insertion dans un modulateur D2 MAC mettant en oeuvre l'accès conditionnel "EUROCRYPT" défini par la publication "Système d'accès conditionnel pour la famille MAC/PAQUET : EUROCRYPT", mars 1989, Ministère des Postes, des Télécommunications et de l'Espace et autres. Des priorités fixes et étagées sont affectées à la messagerie de gestion des titres d'accès (EMM), à la messagerie de contrôle des titres d'accès (ECM), à la voie zéro et aux blocs BI d'interprétation des voies son. Dans l'exemple représenté, les priorités croissantes sont représentées par :
- 10 pour les messages de gestion destinés à un abonné unique, à un groupe partagé et à l'ensemble de l'audience (EMM-U, EMM-S et EMM-G) ;
- 20 pour les messages de gestion destinés aux collectivités (EMM-C) ;
- 30 pour les messages de contrôle des titres d'accès (ECM) ;
- 40 pour la voie zéro ;
- 50 pour les blocs d'interprétation du son BI ;
- 60 pour les blocs d'interprétation indiquant les changements de nature du signal BIT.

En variante, la priorité de la voie zéro peut être modulée en fonction du nombre de paquets à émettre. Un compteur peut être prévu pour mémoriser le nombre de paquets en attente et faire sauter la priorité de 40 à une valeur égale ou supérieure à 50 lorsque ce nombre dépasse une valeur déterminée.

La priorité à affecter aux voies son doit tenir compte de ce qu'elles peuvent appartenir à plusieurs catégories, obéissant à des lois de répartition différentes. Une première loi, ou "loi à 90 octets par bloc" correspond à la transmission du son sous forme comprimée avec protection de premier niveau ou à la transmission à codage linéaire avec protection de deuxième niveau.

La seconde loi, à 120 octets par bloc et répartition à raison de trois blocs pour quatre paquets, correspond à un codage linéaire avec protection de premier niveau ou à un codage comprimé avec protection de deuxième niveau. Les groupes de quatre paquets constituant trois blocs pour les lois à 120 octets par bloc ne doivent pas être entrelacés avec les paquets d'une autre voie de même type.

Une solution pour tout à la fois tenir compte de cet impératif et éviter de favoriser de façon excessive une voie par rapport à une autre consiste à adopter la règle de priorité suivante.
- Pour chaque voie son avec loi à 90 octets, la priorité minimum est de 80 et elle est augmentée d'une unité pour chaque paquet en réserve : la priorité passe ainsi à 84 pour cinq paquets en réserve. En général, on prévoiera une valeur maximale, par exemple de 89.
- A chaque voie son ayant une loi à 120 octets et trois blocs pour quatre paquets, une priorité de base plus faible est affectée, par exemple de 70. Elle peut être accrue d'une unité pour chaque paquet en attente, avec un maximum de 79, aussi longtemps qu'il n'y a pas début d'émission d'un groupe de trois blocs. Dès que commence une telle émission, la priorité des paquets suivants du même groupe est augmentée d'un nombre d'unités tel que la nouvelle priorité soit supérieure à celle de toutes les autres voies ayant une loi à 120 octets par bloc. L'augmentation peut par exemple être effectuée par incrémentation de la priorité d'un nombre égal à la différence entre 10 et 1 pour chaque paquet déjà émis.

Ainsi, par exemple, la priorité passe à :
- 83 pour quatre paquets en réserve ;
- 82 pour trois paquets en réserve ;
- 81 pour deux paquets en réserve.

Une fois les quatres paquets émis, la source sonore correspondante reprend son rang de priorité normal, qui correspond à 70 lorsqu'il y a un seul paquet en attente.

La priorité la plus faible est affectée aux paquets de bourrage.

Une telle stratégie d'insertion est extrêmement flexible et permet d'introduire aisément des sources en leur affectant des priorités intermédiaires.

## Revendications

1. Dispositif multiplexeur d'insertion de paquets numériques, fournis par plusieurs sources différentes, dans un même canal de transmission ayant un débit moyen au moins égal à la somme des débits moyens fournis par les sources, comprenant un organe d'entrée d'appel de paquet (10) relié au canal de transmission, caractérisé en ce que :
- plusieurs au moins desdites sources sont montées en cascade, la source aval (18ₙ) constituant un interface vers l'organe d'entrée, en ce que
- chaque source (18) comprend des moyens de stockage de paquets et des moyens pour élaborer, pour chaque paquet, un ordre de priorité d'insertion en fonction du type de paquet, du nombre de paquets en réserve et des règles d'insertion liées au type de paquets à émettre, et en ce que
- chaque source en cascade, à l'exception de la source la plus en amont (18ₙ₊₂), comporte un circuit d'aiguillage (20) qui, d'une part, fournit, sur sa sortie, la priorité la plus élevée parmi les deux priorités appliquées sur son entrée et dont l'une correspond la source elle-même et l'autre à l'amont de cette source et, d'autre part, oriente l'appel de paquet vers la priorité la plus élevée.

2. Dispositif suivant la revendication 1, caractérisé en ce que, le débit moyen du canal étant nettement supérieur au débit total moyen des sources et les variations de débit instantané disponible ne représentant qu'une fraction faible du débit moyen, chaque source est prévue pour fixer l'ordre de priorité du paquet à émettre une fois pour toutes.

3. Dispositif selon la revendication 1, caractérisé en ce que, le débit moyen du canal étant peu supérieur à la somme des débits moyens, les moyens d'élaboration de certaines au moins des sources comportent des moyens qui augmentent la priorité des paquets une priorité en fonction du temps d'attente des paquets.

4. Dispositif selon la revendication 1, 2 ou 3, caractérisé en ce que chaque source, autre que la source amont, comprend un circuit d'aiguillage (20) ayant un comparateur de priorités (22) commandant un commutateur d'autorisation d'émission (24) et un commutateur de transmission de paquets (26), les commutateurs des sources étant en cascade de façon à provoquer l'envoi d'un paquet par celle des sources dont le premier paquet en réserve présente la priorité la plus élevée.

5. Dispositif selon l'une quelconque des revendications précédentes d'insertion de paquets pour constituer le multiplex numérique d'un signal de télévision de type X MAC/PAQUET à accès conditionnel, caractérisé en ce que les sources de voie son fournissant trois blocs numériques pour quatre paquets sont prévues pour accroître leur priorité dès début d'émision d'un groupe de trois blocs.

6. Dispositif selon la revendication 5, caractérisé en ce que chacune des sources de voie son est prévue pour que sa priorité augmente d'une unité pour chaque paquet en réserve, l'augmentation de priorité lors du début d'émission d'un groupe de trois blocs étant suffisante pour que la source ayant commencé à émettre ait une priorité supérieure à celle de toutes les autres sources sonores à émission par groupe de trois blocs en quatre paquets.

7. Dispositif selon la revendication 5 ou 6, pour signal de télévision à accès conditionnel suivant la norme EUROCRYPT, caractérisé en ce que les sources de messages de gestion de titre d'accès (EMM), les sources de messages de contrôle de titres d'accès (ECM) et la source de voie zéro sont affectées de priorités fixes, de degré croissant inférieur à celles des voies son.

## Patentansprüche

1. Multiplexer zur Einfügung von aus mehreren verschiedenen Quellen stammenden digitalen Paketen in denselben Übertragungskanal, wobei dieser Übertragungskanal eine Durchschnittsleistung aufweist, die wenigstens der Summe der Durchschnittsleistungen der Quellen entspricht, enthaltend ein Eingabeelement (10) für den Paketabruf, das mit dem Übertragungskanal verbunden ist, dadurch gekennzeichnet, daß
- wenigstens mehrere dieser Quellen in Kaskadenschaltung angeordnet sind, wobei die stromabwärts gelegene Quelle (18ₙ) eine Anschlußstelle für das Eingabeelement bildet,
- jede Quelle (18) Mittel zum Speichern der Pakete und Mittel zur Ausarbeitung einer Reihenfolge der Einfügungspriorität für jedes Paket in Abhängigkeit von der Paketart, der Anzahl der im Speicher befindlichen Pakete und der durch die Art der auszusendenden Pakete bestimmten Einfügungsregeln aufweist, und
- daß jede der in Kaskadenschlatung angeordneten Quellen, mit Ausnahme der am weitesten stromaufwärts gelegenen Quelle (18ₙ₊₂), eine Schaltungsweiche (20) enthält, die zum einen an ihrem Ausgang die höhere der beiden ihr an ihrem Eingang zugeführten Priortiäten liefert, wobei die eine Priorität von der betreffenden Quelle selbst stammt und die andere von der gegenüber dieser Quelle stromaufwärts gelegenen Quelle, und die zum anderen den Paketabruf nach der höchsten Priorität ausrichtet.

2. Multiplexer nach Anspruch 1, dadurch gekennzeichnet, daß die Durchschnittsleistung des Kanals deutlich höher ist als die durchschnittliche Gesamtleistung der Quellen und daß die Abweichung der jeweils momentan zur Verfügung stehenden Leistung nur einen geringen Teil der Durchschnittsleistung beträgt, und daß jede Quelle in der Lage ist, den Prioritätsrang des auszusendenden Pakets ein für alle mal festzulegen.

3. Multiplexer nach Anspruch 1, dadurch gekennzeichnet, daß die Durchschnittsleistung des Kanals nur geringfügig höher ist als die Summe der Durchschnittsleistungen und daß die Mittel zur Ausarbeitung einer Reihenfolge wenigstens einiger Quellen solche Mittel umfassen, die die Priorität der Pakete in Abhängigkeit von der Wartezeit der Pakete erhöhen.

4. Multiplexer nach Anspruch 1, 2 oder 3, dadurch gekennzeichnet, daß jede Quelle, mit Ausnahme der stromaufwärts gelegenen Quelle, eine Schaltungsweiche (20) mit einem Prioritäts-Vergleichselement (22) umfaßt, das einen Schalter (24) für die Sendefreigabe und einen Schalter (26) für die Paketübertragung umfaßt, wobei die Wechselschalter der Quellen derart in Kaskadenschaltung angeordnet sind, daß ein Aussenden eines Paketes durch diejenige Quelle erfolgt, deren erstes im Speicher befindliches Paket die höchste Priorität aufweist.

5. Multiplexer nach einem der vorangegangenen Ansprüche zur Einfügung von Paketen zur Verwendung als Digitalmultiplexer eines Fernsehsignals der Art X MAC/PAQUET mit bedingtem Zugriff, dadurch gekennzeichnet, daß die Quellen der Tonkanäle, die für vier Pakete drei digitale Blöcke liefern, so ausgeleget sind, daß sie ihre Priorität bei Beginn des Aussendens einer Gruppe von drei Blöcken erhöhen.

6. Multiplexer nach Anspruch 5, dadurch gekennzeichnet, daß jede Quelle eines Tonkanals in der Lage ist, ihre Priorität um eine Einheit für jedes gespeicherte Paket zu erhöhen, wobei die Prioritätserhöhung beim Beginn des Aussendens einer Gruppe von drei Blöcken ausreichend groß ist, daß die Quelle, die mit den Aussenden begonnen hat, eine höhere Priorität aufweist, als alle anderen Tonquellen zum Aussenden von Tönen in Gruppen von drei Blöcken für vier Pakete.

7. Multiplexer nach Anspurch 5 oder 6 für ein Fernsehsignal mit bedingtem Zugriff entsprechend der Norm EUROCRYPT, dadurch gekennzeichnet, daß die Quellen für Verwaltungsinformationen von Zugriffsberechtigungen (EMM), die Quellen von Kontrollinformationen von Zugriffsberechtigungen (ECM) und die Quelle des Null-Kanals von festgelegten Prioritäten beeinflußt werden, deren Rang weniger stark ansteigt als der der Tonkanäle.

## Claims

1. Multiplexing device for insertion of digital packets, supplied by a plurality of different sources, in a same transmission channel having an average data rate at least equal to the sum of the average data rates supplied by the sources, comprising a packet call input unit (10) connected to the transmission channel, characterized in that:
- at least some of said sources are cascade mounted, the downstream source (18ₙ) constituting an interface with the input unit, in that
- each source (18) comprises means for storing packets and for generating, for each packet, an insertion priority order which is a function of the type of packet, of the number of reserve packets, and of insertion rules associated with the type of packets to be transmitted, and in that
- each cascade source, with the exception of the most upstream source (18ₙ₊₂), has a routing circuit (20) which, on one hand, supplies, at its output, the highest priority among the two priorities applied to its input, and of which one corresponds to the source itself and the second to the upstream of said source and, on the other hand, directs the packet call to the highest priority.

2. Device as claimed in claim 1, characterized in that, the average data rate of the channel being much higher than the average total data rate of the sources and the variations in the available instantaneous data rate only representing a small fraction of the average data rate, each source is arranged to set the order priority of the packet to be transmitted once and for all.

3. Device as claimed in claim 1, characterized in that, the average data rate of the channel being only slightly higher than the sum of the average data rates, the means for generation for at least some of the sources-comprise means which increase the priority of the packets responsive to the waiting time of the packets.

4. Device as claimed in claim 1, 2 or 3, characterized in that each source, other than the upstream source, comprises a routing circuit (20) having a priority comparator (22) controlling a transmission authorization switch (24) and a packet transmission switch (26), the switches of the sources being mounted in cascade in order to cause the sending of packet by that source whose first reserve pocket has the highest priority.

5. Device as claimed in any preceding claim for the insertion of packets to make up the digital multiplex of a television signal of the X MAC/PACKET conditional access type, characterized in that the sound channel sources supplying three digital blocks for four packets are designed to increase the priority thereof as soon as the transmission of a group of three blocks begins.

6. Device as claimed in claim 5, characterized in that each of the sound channel sources is designed so that the priority thereof rises by one for each reserve packet, the increase in priority at the start of the transmission of a group of three blocks being sufficient so that the source that has begun to transmit has a priority higher than that of all the other sound sources attempting to transmit by groups of three blocks in four packets.

7. Device as claimed in claim 4 and 6, for conditional access television signal according to EUROCRYPT standard, characterized in that the entitlement management message sources (EMM), the entitlement checking message sources (ECM) and the zero channel source are assigned fixed priorities, with degrees increasing in that order and lower than those of the sound channels.
